(19) Europäisches Patentamt
European Patent Office
Office européen des brevets

(11) EP 2 789 634 A1

(12) # EUROPEAN PATENT APPLICATION
published in accordance with Art. 153(4) EPC

(43) Date of publication:
**15.10.2014 Bulletin 2014/42**

(21) Application number: **12853145.6**

(22) Date of filing: **25.09.2012**

(51) Int Cl.:
***C08F 220/14*** *(2006.01)*
***C08F 220/18*** *(2006.01)*
***G02F 1/1335*** *(2006.01)*
***B29L 11/00*** *(2006.01)*
***B29C 55/02*** *(2006.01)*
***G02B 5/30*** *(2006.01)*
***B29L 7/00*** *(2006.01)*

(86) International application number:
**PCT/JP2012/074539**

(87) International publication number:
**WO 2013/080642 (06.06.2013 Gazette 2013/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2011 JP 2011262426**

(71) Applicants:
- **Keio University**
  **Tokyo 108-8345 (JP)**
- **JX Nippon Oil & Energy Corporation**
  **Chiyoda-ku**
  **Tokyo 100-8162 (JP)**

(72) Inventors:
- **KOIKE Yasuhiro**
  **Yokohama-shi**
  **Kanagawa 223-8522 (JP)**
- **TAGAYA Akihiro**
  **Yokohama-shi**
  **Kanagawa 223-8522 (JP)**
- **MATSUO Akira**
  **Tokyo 100-8162 (JP)**
- **UCHIZAWA Sayako**
  **Tokyo 100-8162 (JP)**
- **MATSUMURA Yasuo**
  **Tokyo 100-8162 (JP)**

(74) Representative: **Müller-Boré & Partner**
**Patentanwälte PartG mbB**
**Friedenheimer Brücke 21**
**80639 München (DE)**

(54) **OPTICAL FILM, RESIN MATERIAL FOR OPTICAL FILM, AND IMAGE DISPLAY DEVICE**

(57) Disclosed is an optical film comprising a resin material containing a copolymer of 20 to 90% by weight of methyl methacrylate, 10 to 70% by weight of tert-butylcyclohexyl methacrylate represented by formula (I):

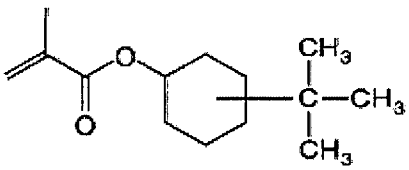

(1)

and 0 to 20% by weight of a monomer other than methyl methacrylate and tert-butylcyclohexyl methacrylate, the optical film having been produced by drawing an undrawn film formed by melt-extruding the resin material by a factor of 1.4 to 6.0 in terms of area ratio.

EP 2 789 634 A1

**Description**

Technical Field

The present invention relates to an optical film, a resin material for an optical film, and an image display device.

Background of the Invention

Acrylic polymers typified by PMMA (polymethyl methacrylate) have a high light transmittance, possess excellent moldability, and thus have hitherto been applied as optical materials in various applications. In recent years, films using thermoplastic acrylic resins have become more and more used as optical members for image display devices such as liquid crystal display devices, plasma displays, and organic EL display devices.
For example, patent document 1 describes a transparent acrylic film comprising 90 to 99.9% by weight of an acrylic resin that has a glass transition temperature of 120°C or above and has a lactone ring structure, and 10 to 0.1% by weight of a flexible resin having a glass transition temperature of 10°C or below. The claimed advantage of the transparent acrylic film is high heat resistance and excellent flexibility.
Patent document 2 describes a resin composition for an optical material, the resin composition comprising a copolymer (1) containing (a) 5% by weight (inclusive) to 85% by weight (exclusive) of units derived from a monomer having a positive photoelastic coefficient and a negative inherent birefringence, (b) 5% by weight (inclusive) to 85% by weight (exclusive) of units derived from a monomer having a negative photoelastic coefficient and a negative inherent birefringence, and (c) 10% by weight (exclusive) to 50% by weight (inclusive) of units having a five- or six-membered ring structure. The claimed advantage of the resin composition for an optical material is that the in-plane retardation (Re) can be closely controlled and optical elements such as optical films having a small photoelastic coefficient can be produced.
Patent document 3 describes the provision of an acrylic film that has a coefficient of thermal expansion of 40 to 100 ppm/°C in both machine direction (MD) and tranverse direction (TD) of the film at 40°C to 90°C and does not undergo a significant temperature fluctuation-derived change in color when the film is incorporated in a liquid crystal display device.

PRIOR ART DOCUMENTS

Patent Documents

Patent document 1: Japanese Patent Application Laid-Open No. 100044/2007
Patent document 2: Japanese Patent Application Laid-Open No. 255149/2008
Patent document 3: Japanese Patent Application Laid-Open No. 292869/2009

[SUMMARY OF THE INVENTION]

Problems to be Solved by the Invention

Birefringence is one of important optical properties that should be considered when thermoplastic resins are used as optical films, for example, for image display devices. An "orientation birefringence" mainly derived from the orientation of the main chain of the polymer and a "photoelastic birefringence" derived from stress applied to the film may be mentioned as the birefringence exhibited by the optical film. The sign of the orientation birefringence and the sign of the photoelastic birefringence derive from the chemical structure of the polymer and are inherent properties of respective polymers.
The orientation birefringence is generally developed by the orientation of the main chain of a polymer having a chain-like structure. The orientation of the main chain occurs, for example, in a process involving flow of the material such as a process of extrusion or drawing in polymer film production, and is fixed and remains in the film.
On the other hand, the photoelastic birefringence is caused by elastic deformation of the film. For example, volume shrinkage that occurs by cooling from a temperature around the glass transition temperature of the polymer to a temperature below the transition temperature causes elastic stress to remain within the film, which is causative of the photoelatstic birefringence. Further, external force which the optical film receives in such a state that the optical film is fixed to a device at an ordinary temperature also leads to the occurrence of stress in the film that in turn leads to the development of photoelastic birefringence.

A large birefringence in optical films used in liquid crystal display devices and the like is in many cases unfavorable because the quality of images displayed is deteriorated. This has led to a demand for films having a small birefringence. Further, an increase in screen size of image display devices has led to a strong demand for an increase in areas of these films. To satisfy this demand, an improvement in mechanical properties such as strength and flex resistance in optical films is desired. Further, a tendency towards a thickness reduction of image display devices has led to a demand for an improvement in heat resistance of optical films to such a level that optical films can also be provided at a position near a heat generating part such as a light source.

In patent document 1, there is no description on film phase difference values indicating the level of orientation birefringence and on birefringence values such as photoelastic coefficient. Thus, whether the film satisfies a low birefringence requirement as an optical film used, for example, for liquid crystal display devices has not been studied in detail.

The optical film described in patent document 2 suffers from a problem that the copolymer containing units (a) that have a positive photoelastic coefficient and a negative inherent birefringence and are typified by styrene units have very low flex resistance. In Examples of patent document 2, one of the absolute value of the in-plane retardation (Re) and the retardation in the thicknesswise direction (Rth) that indicate orientation birefringence is not less than 6 (nm), and, thus, it is difficult to say that the resin composition has a satisfactorily low orientation birefringence.

In the acrylic film described in patent document 3, even when the level of dimensional change of the film against temperature fluctuation is low, the change in color cannot be fully suppressed when the film has a large photoelastic coefficient. In addition to the color, a view angle-derived lowering in contrast poses an image quality problem. This matter is not described and studied in detail in Patent document 3.

An object of the present invention is to provide an optical film that, when incorporated as an optical film in liquid crystal display devices, has a birefringence low enough to satisfactorily avoid a deterioration in image quality and, at the same time, has a good balance between heat resistance and flex resistance. Another object of the present invention is to provide a resin material for the optical film, a method for producing the optical film, and a liquid crystal display device comprising the optical film.

Means for Solving the Problems

According to one aspect of the present invention, there is provided an optical film comprising a resin material containing a copolymer of 20 to 90% by weight of methyl methacrylate, 10 to 70% by weight of tert-butylcyclohexyl methacrylate represented by formula (I), and 0 to 20% by weight of a monomer other than methyl methacrylate and tert-butylcyclohexyl methacrylate, the optical film having been produced by drawing an undrawn film formed by melt-extruding the resin material by a factor of 1.4 to 6.0 in terms of area ratio.

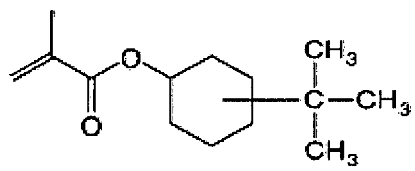

(1)

This optical film is low in both the orientation birefringence and the photoelastic birefringence and possesses excellent flex resistance and heat resistance. Accordingly, the optical film is suitable for use as optical members used in optics-related devices such as liquid crystal display devices.

According to another aspect of the present invention, there is provided an optical film comprising a resin material containing a copolymer of 20 to 90% by weight of methyl methacrylate, 10 to 70% by weight of tert-butylcyclohexyl methacrylate represented by formula (I), and 0 to 20% by weight of a monomer other than methyl methacrylate and tert-butylcyclohexyl methacrylate, wherein the absolute value of an in-plane phase difference value, Re, and the absolute value of a phase difference value in the thicknesswise direction, Rth, are each not more than 5.0 nm, and the absolute value of a photoelastic coefficient is not more than $5.0 \times 10^{-12}$ (/Pa).

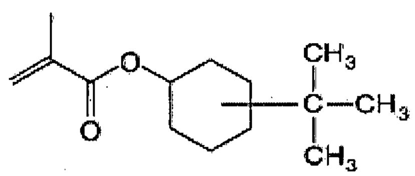

(1)

This optical film is low in both the orientation birefringence and the photoelastic birefringence and, thus, when

incorporated in a liquid crystal display device, can satisfactorily avoid a deterioration in image quality. Further, the optical film has a good balance between heat resistance and flex resistance.

In one embodiment of the present invention, the resin material have a glass transition temperature of 105°C or above. Optical films formed of the resin material are particularly excellent in heat resistance and thus are more suitable for provision in places near a heat generating portions such as light sources in image display devices.

In one embodiment of the present invention, the number of times of flexing in an MIT flex resistance test according to JIS (Japanese Industrial Standards) P 8115 is 100 times or more. This optical film is particularly excellent in flex resistance and thus is more suitable for applications where an increase in area is required.

According to still another aspect of the present invention, there is provided a resin material for an optical film, the resin material comprising a copolymer of 20 to 90% by weight of methyl methacrylate, 10 to 70% by weight of tert-butylcyclohexyl methacrylate represented by formula (I), and 0 to 20% by weight of a monomer other than methyl methacrylate and tert-butylcyclohexyl methacrylate.

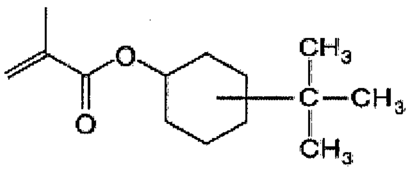
( 1 )

According to this resin material for an optical film, an optical film can easily be obtained that is low in both orientation birefringence and photoelastic birefringence and possesses excellent flex resistance and heat resistance.

According to a further aspect of the present invention, there is provided a method for producing an optical film comprising the steps of: melt-extruding the above resin material for an optical film to obtain an undrawn film; and a drawing step of drawing the undrawn film by a factor of 1.4 to 6.0 times in terms of area ratio to obtain an optical film.

According to this production method, an optical film can easily be obtained that is low in both orientation birefringence and photoelastic birefringence and possesses excellent flex resistance and heat resistance.

According to another aspect of the present invention, there is provided an image display device comprising the above optical film. In the optical film, since both the orientation birefringence and the photoelastic birefringence are small, a deterioration in mage quality can be satisfactorily avoided. Thus, according to the image display device, a good image quality can be realized.

Effect of the Inention

The present invention provides an optical film that has a birefringence low enough to satisfactorily avoid a deterioration in image quality when the film is incorporated in a liquid crystal display device, the film having a good balance between heat resistance and flex resistance. Further, the present invention provides a resin material for use in the production of the optical film, a method for producing the optical film, and a liquid crystal display device comprising the optical film.

[MODE FOR CARRYING OUT THE INVENTION]

Preferred embodiments of the present invention will be described.

(Resin material) The resin material according to this embodiment contains a copolymer of 20 to 90% by weight of methyl methacrylate, 10 to 70% by weight of tert-butylcyclohexyl methacrylate represented by formula (I), and 0 to 20% by weight of a monomer (a) other than methyl methacrylate and tert-butylcyclohexyl methacrylate.

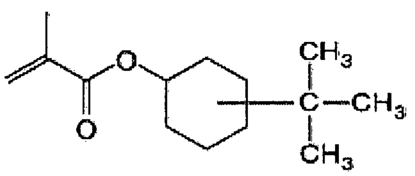
( 1 )

Here 0% by weight of monomer (a) means that the copolymer is a copolymer of methacrylate and tert-butylcyclohexyl methacrylate.

Geometrical isomers of cis form and trans form exist in tert-butylcyclohexyl methacrylate. In this embodiment, tert-butylcyclohexyl methacrylate may be in cis form, trans form, or a mixture of cis form and trans form.

The glass transition temperature of the copolymer can be increased by increasing the proportion of the trans form as tert-butylcyclohexyl methacrylate. However, close purification and the like are necessary for obtaining a monomer having a large proportion of trans form, disadvantageously leading to increased synthesis cost. The proportion of cis form in tert-butylcyclohexyl methacrylate may be 10 to 50% by weight or 20 to 40% by weight. According to this tert-butylcyclohexyl methacrylate, suitable heat resistance and synthesis cost as the optical film can be simultaneously realized.

2-tert-butylcyclohexyl methacrylate, 3-tert-butylcyclohexyl methacrylate, and 4-tert-butylcyclohexyl methacrylate may be mentioned as the tert-butylcyclohexyl methacrylate. In this embodiment, the tert-butylcyclohexyl methacrylate may be any one of them or a mixture thereof. Further, in this embodiment, preferably, the tert-butylcyclohexyl methacrylate contains at least one of 3-tert-butylcyclohexyl methacrylate and 4-tert-butylcyclohexyl methacrylate, more preferably contains 4-tert-butylcyclohexyl methacrylate.

The monomer (a) may be a monomer copolymerizable with methyl methacrylate and tert-butylcyclohexyl methacrylate. For example, the monomer (a) may be an (meth)acrylate monomer.

When the monomer (a) is the (meth)acrylate monomer, examples thereof include methyl acrylate, methyl methacrylate, ethyl acrylate, ethyl methacrylate, butyl acrylate, butyl methacrylate, cyclohexyl acrylate, cyclohexyl methacrylate, benzyl acrylate, benzyl methacrylate, phenoxyethyl acrylate, phenoxyethyl methacrylate, phenoxydiethylene glycol acrylate, phenoxydiethylene glycol methacrylate, biphenyl acrylate, biphenyl methacrylate, 2,2,2-trifluoroethyl acrylate, 2,2,2-trifluoroethyl methacrylate, pentafluorobenzyl acrylate, pentafluorobenzyl methacrylate, trifluorophenyl acrylate, trifluorophenyl methacrylate, trihydroperfluoropropyl acrylate, trihydroperfluoropropyl methacrylate, isobornyl acrylate, isobornyl methacrylate, dicyclopentanyl acrylate, dicyclopentanyl methacrylate, ethyladamantyl acrylate, ethyladamantyl methacrylate, methyladamantyl acrylate, and methyladamantyl methacrylate.

As described in Japanese Patent Application Laid-Open No. 233912/2001, it is known that thermal decomposition is suppressed by copolymerizing a methacrylic resin with 1 to 5% by weight of an alkyl acrylate. For thermal decomposition suppression purposes, at least one alkyl acrylate may be adopted as the monomer (a), and the use of 1 to 5% by weight of the alkyl acrylate may be adopted.

The weight average molecular weight of the copolymer is preferably not less than $5.0 \times 10^4$, more preferably not less than $1.0 \times 10^5$. In this copolymer, the main chain of the polymer can be more easily oriented in melt extrusion of the resin material, and, thus, an optical film having further improved flex resistance can be obtained.

The weight average molecular weight of the copolymer is preferably not more than $4.0 \times 10^5$, more preferably not more than $3.0 \times 10^5$. This copolymer has satisfactorily low melt viscosity, and, thus, the film can be more easily formed.

The weight average molecular weight of the copolymer was measured by HLC-8220 GPC manufactured by Tosoh Corporation. Super-MultiporeHZ-M manufactured by Tosoh Corporation was used as a column. The measurement was carried out under conditions of a flow rate of 0.35 ml/min and a column temperature of 40°C, and the weight average molecular weight was determined in terms of molecular weight using standard polystyrene.

The copolymer can be obtained by any copolymerization method without particular limitation. For example, any of mass polymerization, suspension polymerization, emulsion polymerization, and solution polymerization may be applied as a copolymerization method. Here suspension polymerization will be described in detail as one embodiment of the copolymerization method.

In this embodiment, methyl methacrylate, tert-butylcyclohexyl methacrylate, and the monomer (a) are first weighed at a desired weight ratio and are introduced into a suspension polymerization apparatus. Peroyl TCP (1 part by weight) manufactured by NOF Corporation as a polymerization initiator, 0.1 part by weight of 1-octanethiol as a chain transfer agent, 400 parts by weight of deionized water, and 0.6 part by weight of polyvinyl alcohol (Kuraray Poval manufactured by Kuraray Co., Ltd.) as a dispersant together are then introduced. Here the unit "parts by weight" of the introduction amount is a weight ratio of each additive to 100 parts by weight in total of methyl methacrylate, tert-butylcyclohexyl methacrylate, and the monomer (a). The type and introduction amount of the polymerization initiator, the chain transfer agent, the dispersant, and the buffer solution described above are just an example, and the type and the introduction amount are not limited to the above example.

A copolymer having a weight average molecular weight of $5.0 \times 10^4$ to $4.0 \times 10^5$ can be obtained by polymerizing monomers while stirring a monomer phase and an aqueous phase for suspension in the suspension polymerization apparatus at 65°C for 2 hr and then at 85°C for one hr. The weight average molecular weight of the copolymer can be properly regulated by varying the type and introduction amount of the polymerization initiator and the chain transfer agent and the reaction temperature and the reaction time in the suspension polymerization apparatus.

The copolymer obtained in this embodiment is a powder or granules that are filtered and then satisfactorily washed before use in a melt extrusion step which will be described later.

The resin material may contain ingredients other than the copolymer, for example, antioxidants, lubricants, ultraviolet absorbers, and stabilizers.

The content of the copolymer in the resin material is preferably 95 to 100% by weight, more preferably 99 to 100% by weight, based on the total amount of the resin material.

The glass transition temperature of the resin material is preferably 105°C or above. The optical film formed of this resin material, when incorporated in a liquid crystal display device, can withstand heat generated from a light source to avoid shrinkage of the optical film. The glass transition temperature of the resin material is more preferably 110°C or above, still more preferably 115°C or above.

The glass transition temperature is a value determined from an onset temperature of a glass transition point when the temperature is raised at a temperature rise rate of 10°C/min with a differential scanning calorimetric measuring device DSC8000 manufactured by PerkinElmer. The weight of a sample is 10 mg to 15 mg.

(Optical film)

The optical film in this embodiment is a film formed of the above resin material.

Preferably, the optical film satisfies that both the absolute value of the in-plane phase difference value, Re, and the absolute value of the phase difference value in the thicknesswise direction, Rth, are not more than 5.0 nm and the absolute value of the photoelastic coefficient is not more than $5.0 \times 10^{-12}$ (/Pa). Since this optical film is low in both orientation birefringence and photoelastic birefringence, the film, when incorporated in a liquid crystal display device, can avoid a deterioration in image quality.

Preferably, the optical film satisfies that the number of times of flexing in an MIT flex resistance test according to JIS (Japanese Industrial Standards) P 8115 is 100 times or more. This optical film is particularly excellent in flex resistance and thus is more suitable for applications where an increase in area is required.

Preferably, the resin material constituting the optical film has a glass transition temperature of 105°C or above. Optical films formed of the resin material are particularly excellent in heat resistance and thus are more suitable for provision in places near heat generating portions such as light sources in image display devices.

Various properties of the optical film will be described in detail.

The orientation birefringence of the optical film can be evaluated by measuring retardation that is an in-plane phase difference value of the film, Re, and a phase difference value in the thicknesswise direction, Rth, with an Axoscan apparatus manufactured by Axometrics.

Re is expressed by equation (2):

$$Re = (nx - ny) \times d \quad (nm) \quad \ldots (2)$$

wherein nx represents the refractive index in an in-plane one direction; ny represents the refractive index in a direction perpendicular to the in-plane one direction; and d represents the thickness of the film, nm.

Rth is expressed by equation (3):

$$Rth = ((nx + ny)/2 - nz) \times d \quad (nm) \ldots (3)$$

wherein nx represents the refractive index in an in-plane one direction; ny represents the refractive index in a direction perpendicular to the in-plane one direction; nz represents the refractive index in the thicknesswise direction of the film; and d represents the thickness of the film, nm.

Regarding the sign of the phase difference value of the film, when the refractive index in the orientation direction of the main chain of the polymer is large, a positive sign is adopted while, when the refractive index in a direction perpendicular to the drawing direction is large, a negative sign is adopted.

In optical films having low birefringence for use, for example, in protective films for polarizing plates in liquid crystal display devices, the smaller the absolute values of Re and Rth, the better the image quality. Both the absolute values of Re and Rth are preferably not more than 5.0 nm, more preferably not more than 4.0 nm, still more preferably not more than 3.0 nm.

The photoelastic birefringence of the optical film is determined as a photoelastic coefficient C [1/Pa] by measuring, as with the orientation birefringence, the level of change in retardation (Re) (a phase difference value) of the film caused by stress applied to the film with an Axoscan apparatus manufactured by Axometrics. Specifically, the photoelastic coefficient C is calculated by equation (4).

$$C = \Delta Re/(\Delta\sigma \times t) \quad \ldots (4)$$

wherein $\Delta\sigma$ represents the level of change in stress applied to the film, Pa; t represents the thickness of the film, m; and

$\Delta$Re represents the level of change in in-plane phase difference value corresponding to the level of change in stress indicated by $\Delta\sigma$, m. Regarding the sign of the photoelastic coefficient C, when the refractive index in a stress-applied direction is large, a positive sign is adopted while, when the refractive index in a direction perpendicular to the stress applied direction is large, a negative sign is adopted.

In optical films having a low birefringence that are used, for example, in protective films for polarizing plates in liquid crystal display devices, the smaller the absolute value of the photoelastic coefficient C, the better the image quality. The photoelastic coefficient C is preferably not more than $5.0 \times 10^{-12}$ (1/Pa), more preferably not more than $4.0 \times 10^{-12}$(1/Pa), still more preferably not more than $3.0\times10^{-12}$ [1/Pa].

The flex resistance of the optical film can be determined by an MIT flex resistance test according to JIS P 8115. The number of times of flexing in the MIT flex resistance test in this embodiment is measured with a BE-201 MIT flex resistance tester manufactured by Tester Sangyo Co., Ltd. that is also called a MIT flex endurance tester. The measurement is carried out under conditions of a load of 200 g, a flexing point end R of 0.38, a flexing rate of 175 times/min, a flexing angle of 135° on right and left, and a film sample width of 15 mm. The average of the number of times of flexing that caused breaking in repeated flexing of the optical film in the conveying direction, and the number of times of flexing that caused breaking in repeated flexing in the widthwise direction is regarded as the number of times of flexing in the MIT flex resistance test.

When the number of times of flexing in the MIT flex resistance test is 100 times or more, breaking of the optical film in the step of conveying and winding the optical film after the step of drawing or breaking, for example, in the step of laminating the optical film to a polarizing plate or the like can be avoided. A heat shock test that includes laminating the film to a glass substrate through a paste and repeating temperature raising and temperature falling from -20°C to 60°C at intervals of 30 min by 500 cycles is known as a testing method for heat shock resistance of a protective film for a polarizing plate. When the number of times of flexing in the MIT flex resistance test is 100 times or more, cracking in the film during the heat shock test can be avoided. Accordingly, the number of times of flexing in the MIT flex resistance test is preferably 100 times or more, more preferably 120 times or more, still more preferably 150 times or more.

In this embodiment, the optical film is obtained by drawing an undrawn film formed by melt-extruding the resin material by a factor of 1.4 to 6.0 in terms of area ratio.

The optical film thus obtained is low in both orientation birefringence and photoelastic birefringence and possesses excellent flex resistance and heat resistance. Accordingly, the optical film is suitable for use as optical members used in optics-related devices such as liquid crystal display devices.

The thickness of the optical film may be 10 $\mu$m to 150 $\mu$m and may also be 15 $\mu$m to 120 $\mu$m. When the thickness of the optical film is more than 10 $\mu$m, the handleability of the film is good. When the thickness of the optical film is less than 150 $\mu$m, problems such as a haze increase and an increase in material cost per unit area are less likely to occur.

The method for producing an optical film according to an aspect of the present invention will be described in detail.

The method for producing an optical film according to this aspect of the present invention comprises a melt extrusion step of melt-extruding the above resin material to obtain an undrawn film; and a drawing step of drawing the undrawn film by a factor of 1.4 to 6.0 times in terms of area ratio to obtain an optical film.

The step of melt extrusion can be carried out, for example, by an extrusion film forming machine provided with a die lip. In this case, the resin material is heat-melted within the extrusion film forming machine, and the melt is continuously discharged through the die lip to form a film.

The extrusion temperature in the melt extrusion is preferably 130°C to 300°C, more preferably 150°C to 280°C. When the extrusion temperature is 130°C or above, the copolymer in the resin material is satisfactorily melt-kneaded. Thus, the stay of an unmelted product in the film can be satisfactorily avoided. When the extrusion temperature is 300°C or below, the occurrence of problems such as coloring of the film by thermal decomposition or the deposition of decomposition products on the die lip can be satisfactorily avoided.

In the step of drawing, the undrawn film (web film) formed in the step of melt extrusion is drawn to obtain an optical film. Drawing methods include, for example, vertical drawing between rolls using a circumferential velocity difference and lateral drawing using a tenter device, and a successive biaxial drawing method comprising a combination of these drawing methods may also be applied. Further, in the tenter drawing device, a simultaneousbiaxial drawing apparatus in which the clip spacing for holding the end of the film is also increased in the conveying direction of the film can be used. The drawing device may constitute a continuous through-line with an extrusion film forming machine. Alternatively, a drawing method may also be adopted in which the web film wound by the extrusion film forming machine is delivered offline to the stretching device.

The drawing temperature is preferably Tg + 2°C to Tg + 20°C, more preferably Tg + 5°C to Tg + 15°C, wherein Tg represents the glass transition temperature of the web film, °C. When the drawing temperature is Tg + 2°C or above, the occurrence of problems such as breaking of the film during drawing and an increase in haze of the film can be satisfactorily avoided. When the drawing temperature is Tg + 20°C or below, the main chain of the polymer is likely to be oriented and, consequently, the degree of orientation of the main chain of the polymer is likely to be better.

In this embodiment, the drawing ratio is in the range of 1.4 to 6.0 times in terms of area ratio. When the drawing ratio in terms of area ratio is smaller than 1.4 times, the effect of improving the flex resistance of the film by orienting the main chain of the polymer is hardly attained. When the drawing ratio in terms of area ratio is larger than 6.0 times, problems such as clouding of the film or breaking of the film occur.
The drawing of the web film formed by the melt film forming method can contribute to orientation of the main chain of the polymer to improve the flex resistance of the film. However, when the film is not formed of a polymer material having a low birefringence, the film disadvantageously has an increased phase difference value and, thus, when incorporated in a liquid crystal display device, disadvantageously causes a deterioration in image quality. In this embodiment, an optical film that simultaneously has excellent optical properties and flex resistance can be obtained by using the above resin material and regulating the drawing ratio to the above-defined range.

(Image display device)

The image display device according to another aspect of the present invention comprises the above optical film. The optical film is low in both orientation birefringence and photoelastic birefringence, and, thus, a deterioration in image quality can be satisfactorily avoided. Accordingly, this image display device can realize a good image quality. The image display device may be provided, for example, with a polarizing plate with the optical film laminated thereto.
Preferred embodiments have been described above. However, it should be noted that the present invention is not limited to the above embodiments.

[EXAMPLES]

The present invention is further illustrated by the following Examples that are not intended as a limitation of the invention. In the following Examples and Comparative Examples, 4-tert-butylcyclohexyl methacrylate (Blemmer TBCHMA manufactured by Nippon Oils & Fats Co., Ltd.) having a cis-form content of 25 to 33% by weight was used.

Example 1

A particulate polymer (hereinafter sometimes referred to as "polymer (A-1)") was obtained by copolymerizing 70% by weight of methyl methacrylate and 30% by weight of 4-tert-butylcyclohexyl methacrylate by suspension polymerization. The weight average molecular weight of the polymer (A-1) was measured by gel permeation chromatography and was found to be $1.8 \times 10^5$. Further, the glass transition temperature of the polymer (A-1) was measured by differential scanning calorimetry and was found to be 130°C.
The particulate polymer (A-1) was extruded with a twin-screw extruder KZW-30MG manufactured by TECHNOVEL CORPORATION into a film. The diameter of the screw and the effective length (L/D) of the screw in the twin-screw extruder were 15 mm and 30, respectively, and a hanger coat-type T-die was installed in the extruder through an adapter. A mechanism that can regulate a clearance between lips as desired in a range of 20 (μm) to 1000 (μm) by a push-pull bolt was provided in the lip portion of the T-die. The melt of the polymer was discharged in a curtain form through the T-die lip onto a cooling roll, was conveyed while being cooled to room temperature, and was wound around a winding roll to prepare a film. The extruding temperature Tp (°C) was 250°C because, in a noncrystalline polymer having a glass transition temperature of Tg (°C), the extruding temperature is generally known to be optimally determined by formula (5).

$$Tp = 5(Tg + 70)/4 \quad \ldots(5)$$

The film thus obtained was subjected to biaxial drawing with a film drawing machine IMC-190A manufactured by Imoto Machinary Co., Ltd. to obtain a drawn film. The drawing ratio was 1.2 times (-) in both the conveying direction and the widthwise direction, and the area ratio of the film was 1.44 times. The drawing speed was 2.9 times/min, and the drawing temperature was (glass transition temperature) +9°C, that is, 139°C. The thickness of the film after drawing was 40 μm.
For the drawn film thus obtained, the in-plane phase difference, Re, and the phase difference in the thicknesswise direction, Rth, were -1.0 (nm) and -5.0 (nm), respectively. The photoelastic coefficient C was $-2.9 \times 10^{-12}$ (1/Pa). The number of times of flexing in the MIT flex resistance test was 110 times. The glass transition temperature of the film was the same as that of the particulate polymer (A-1) and 130°C.
The film was visually inspected. As a result, the film was not opaque but was highly transparent. Further, since both the absolute value of Re and the absolute value of Rth were not more than 5.0 (nm) and, at the same time, the

photoelastic coefficient C was not more than $5.0 \times 10^{-12}$ (1/Pa), the film, even when used as a polarizing plate protective film in a liquid crystal display device, did not cause a deterioration in image quality. Further, since the number of times of flexing in the MIT flex resistance test of the film was 100 (times) or more, the film was not broken, for example, in the step of laminating the film to the polarizing plate and the like and was excellent to handle. Further, the film could withstand a heat shock test of the protective film for a polarizing plate. Furthermore, since the film had a glass transition temperature of not less than 105°C, when a polarizing plate obtained by laminating the film was incorporated in a liquid crystal display device, the polarizing plate did not pose a problem of warpage and the like. That is, the film maintained transparency inherent in the acrylic resin and had a good balance among low birefringence, flex resistance, and heat resistance.

Example 2

A particulate polymer (hereinafter sometimes referred to as "polymer (A-2)") was obtained by copolymerizing 60% by weight of methyl methacrylate and 40% by weight of 4-tert-butylcyclohexyl methacrylate by suspension polymerization. The weight average molecular weight of the polymer (A-2) was measured by gel permeation chromatography and was found to be $1.8 \times 10^5$. Further, the glass transition temperature of the polymer (A-2) was measured by differential scanning calorimetry and was found to be 135°C.

A film was produced in the same manner as in Example 1, except that the polymer (A-2) was used instead of the polymer (A-1).

For the drawn film thus obtained, the thickness, the in-plane phase difference, Re, and the phase difference in the thicknesswise direction, Rth, were 40 μm, -0.5 (nm), and -2.0 (nm), respectively. The photoelastic coefficient C was $-1.0 \times 10^{-12}$(1/Pa). The number of times of flexing in the MIT flex resistance test was 103 times. The glass transition temperature of the film was the same as that of the particulate polymer (A-2) and 135°C.

As with Example 1, the film maintained transparency inherent in the acrylic resin and had a good balance among low birefringence, flex resistance, and heat resistance.

Example 3

An optical film using the polymer (A-2) was produced in the same manner as in Example 2, except that the drawing was carried out so that the drawing ratio was 2.2 times (-) in both the conveying direction and the widthwise direction and the area ratio of the film was 4.84 times.

For the drawn film thus obtained, the thickness, the in-plane phase difference, Re, and the phase difference in the thicknesswise direction, Rth, were 40 μm, -0.5 (nm), and -4.7 (nm), respectively. The photoelastic coefficient C was $-1.0 \times 10^{-12}$ (1/Pa). The number of times of flexing in the MIT flex resistance test was 450 times. The glass transition temperature of the film was the same as that of the particulate polymer (A-2) and 135°C.

As with Example 1, the film maintained transparency inherent in the acrylic resin and had a good balance among low birefringence, flex resistance, and heat resistance.

Example 4

A particulate polymer (hereinafter sometimes referred to as "polymer (A-3)") was obtained by copolymerizing 50% by weight of methyl methacrylate and 50% by weight of 4-tert-butylcyclohexyl methacrylate by suspension polymerization. The weight average molecular weight of the polymer (A-3) was measured by gel permeation chromatography and was found to be $1.8 \times 10^5$. Further, the glass transition temperature of the polymer (A-3) was measured by differential scanning calorimetry and was found to be 140°C.

A film was produced in the same manner as in Example 1, except that the particulate polymer (A-3) was used. In this case, the drawing was carried out so that the drawing ratio was 1.4 times (-) in both the conveying direction and the widthwise direction and the area ratio of the film was 1.96 times.

For the drawn film thus obtained, the thickness, the in-plane phase difference, Re, and the phase difference in the thicknesswise direction, Rth, were 40 μm, -0.1 (nm), and -0.1 (nm), respectively. The photoelastic coefficient C was $-0.1 \times 10^{-12}$ (1/Pa). The number of times of flexing in the MIT flex resistance test was 110 times. The glass transition temperature of the film was the same as that of the particulate polymer (A-3) and 140°C.

As with Example 1, the film maintained transparency inherent in the acrylic resin and had a good balance among low birefringence, flex resistance, and heat resistance.

Example 5 An optical film using the polymer (A-3) was produced in the same manner as in Example 4, except that the drawing was carried out so that the drawing ratio was 2.4 times (-) in both the conveying direction and the widthwise direction and the area ratio of the film was 5.76 times.

For the drawn film thus obtained, the thickness, the in-plane phase difference, Re, and the phase difference in the thicknesswise direction, Rth, were 40 μm, -0.1 (nm), and -1.1 (nm), respectively. The photoelastic coefficient C

was $0.1 \times 10^{-12}$(1/Pa). The number of times of flexing in the MIT flex resistance test was 445 times. The glass transition temperature of the film was the same as that of the particulate polymer(A-3) and 140°C.

As with Example 1, the film maintained transparency inherent in the acrylic resin and had a good balance among low birefringence, flex resistance, and heat resistance.

Example 6

A particulate polymer (hereinafter sometimes referred to as "polymer (A-4)") was obtained by copolymerizing 40% by weight of methyl methacrylate and 60% by weight of 4-tert-butylcyclohexyl methacrylate by suspension polymerization. The weight average molecular weight of the polymer (A-4) was measured by gel permeation chromatography and was found to be $1.8 \times 10^5$. Further, the glass transition temperature of the polymer (A-4) was measured by differential scanning calorimetry and was found to be 145°C.

A film was produced in the same manner as in Example 1, except that the particulate polymer (A-4) was used. In this case, the drawing was carried out so that the drawing ratio was 1.6 times (-) in both the conveying direction and the widthwise direction and the area ratio of the film was 2.56 times.

For the drawn film thus obtained, the thickness, the in-plane phase difference, Re, and the phase difference in the thicknesswise direction, Rth, were 40 μm, 0.1 (nm), and 0.3 (nm), respectively. The photoelastic coefficient C was $1.0 \times 10^{-12}$ (1/Pa). The number of times of flexing in the MIT flex resistance test was 105 times. The glass transition temperature of the film was the same as that of the particulate polymer (A-4) and 145°C.

As with Example 1, the film maintained transparency inherent in the acrylic resin and had a good balance among low birefringence, flex resistance, and heat resistance.

Example 7

An optical film using the polymer (A-4) was produced in the same manner as in Example 6, except that the drawing was carried out so that the drawing ratio was 2.4 times (-) in both the conveying direction and the widthwise direction and the area ratio of the film was 5.76 times.

For the drawn film thus obtained, the thickness, the in-plane phase difference, Re, and the phase difference in the thicknesswise direction, Rth, were 40 μm, 0.1 (nm), and 1.4 (nm), respectively. The photoelastic coefficient C was $1.0 \times 10^{-12}$ (1/Pa). The number of times of flexing in the MIT flex resistance test was 393 times. The glass transition temperature of the film was the same as that of the particulate polymer (A-4) and 145°C.

As with Example 1, the film maintained transparency inherent in the acrylic resin and had a good balance among low birefringence, flex resistance, and heat resistance.

Example 8

A particulate polymer (hereinafter sometimes referred to as "polymer (A-5)") was obtained by copolymerizing 30% by weight of methyl methacrylate and 70% by weight of 4-tert-butylcyclohexyl methacrylate by suspension polymerization. The weight average molecular weight of the polymer (A-5) was measured by gel permeation chromatography and was found to be $1.8 \times 10^5$. Further, the glass transition temperature of the polymer (A-5) was measured by differential scanning calorimetry and was found to be 150°C.

A film was produced in the same manner as in Example 1, except that the particulate polymer (A-5) was used. In this case, the drawing was carried out so that the drawing ratio was 1.8 times (-) in both the conveying direction and the widthwise direction and the area ratio of the film was 3.24 times.

For the drawn film thus obtained, the thickness, the in-plane phase difference, Re, and the phase difference in the thicknesswise direction, Rth, were 40 μm, 1.0 (nm), and 4.8 (nm), respectively. The photoelastic coefficient C was $2.5 \times 10^{-12}$ (1/Pa). The number of times of flexing in the MIT flex resistance test was 105 times. The glass transition temperature of the film was the same as that of the particulate polymer (A-5) and 150°C.

As with Example 1, the film maintained transparency inherent in the acrylic resin and had a good balance among low birefringence, flex resistance, and heat resistance.

Example 9

A particulate polymer (hereinafter sometimes referred to as "polymer (A-6)") was obtained by copolymerizing 85% by weight of methyl methacrylate, 10% by weight of 4-tert-butylcyclohexyl methacrylate, and 5% by weight of phenoxyethyl acrylate by suspension polymerization. The weight average molecular weight of the polymer (A-6) was measured by gel permeation chromatography and was found to be $1.8 \times 10^5$. The glass transition temperature was measured by differential scanning calorimetry and was found to be 108°C.

A film was produced in the same manner as in Example 1, except that the particulate polymer (A-6) was used. In this case, the drawing ratio was 1.2 times (-) in both the conveying direction and the widthwise direction, and the area ratio of the film was 1.44 times.

For the drawn film thus obtained, the thickness, the in-plane phase difference, Re, and the phase difference in the thicknesswise direction, Rth, were 40 μm, -1.0 (nm), and -1.0 (nm), respectively. The photoelastic coefficient C was $0.5 \times 10^{-12}$(1/Pa). The number of times of flexing in the MIT flex resistance test was 104 times. The glass transition temperature of the film was the same as that of the particulate polymer (A-6) and 108°C.

As with Example 1, the film maintained transparency inherent in the acrylic resin and had a good balance among low birefringence, flex resistance, and heat resistance.

Example 10

An optical film using the polymer (A-6) was produced in the same manner as in Example 9, except that the drawing was carried out so that the drawing ratio was 2.4 times (-) in both the conveying direction and the widthwise direction and the area ratio of the film was 5.76 times.

For the drawn film thus obtained, the thickness, the in-plane phase difference, Re, and the phase difference in the thicknesswise direction, Rth, were 40 μm, -0.1 (nm), and -3.2 (nm), respectively. The photoelastic coefficient C was $0.5 \times 10^{-12}$ (1/Pa). The number of times of flexing in the MIT flex resistance test was 494 times. The glass transition temperature of the film was the same as that of the particulate polymer (A-6) and 108°C.

As with Example 1, the film maintained transparency inherent in the acrylic resin and had a good balance among low birefringence, flex resistance, and heat resistance.

Example 11

A particulate polymer (hereinafter sometimes referred to as "polymer (A-7)") was obtained by copolymerizing 75% by weight of methyl methacrylate, 20% by weight of 4-tert-butylcyclohexyl methacrylate, and 5% by weight of phenoxyethyl acrylate by suspension polymerization. The weight average molecular weight of the polymer (A-7) was measured by gel permeation chromatography and was found to be $1.8 \times 10^5$. The glass transition temperature was measured by differential scanning calorimetry and was found to be 120°C.

A film was produced in the same manner as in Example 1, except that the particulate polymer (A-7) was used. In this case, the drawing was carried out so that the drawing ratio was 2.4 times (-) in both the conveying direction and the widthwise direction, and the area ratio of the film was 5.76 times.

For the drawn film thus obtained, the thickness, the in-plane phase difference, Re, and the phase difference in the thicknesswise direction, Rth, were 40 μm, 0.1 (nm), and 4.0 (nm), respectively. The photoelastic coefficient C was $1.0 \times 10^{-12}$ (1/Pa). The number of times of flexing in the MIT flex resistance test was 421 times. The glass transition temperature of the film was the same as that of the particulate polymer (A-7) and 120°C.

As with Example 1, the film maintained transparency inherent in the acrylic resin and had a good balance among low birefringence, flex resistance, and heat resistance.

Example 12

A particulate polymer (hereinafter sometimes referred to as "polymer (A-8)") was obtained by copolymerizing 70% by weight of methyl methacrylate, 20% by weight of 4-tert-butylcyclohexyl methacrylate, and 10% by weight of phenoxyethyl acrylate by suspension polymerization. The weight average molecular weight of the polymer (A-8) was measured by gel permeation chromatography and was found to be $1.8 \times 10^5$. The glass transition temperature was measured by differential scanning calorimetry and was found to be 107°C.

A film was produced in the same manner as in Example 1, except that the particulate polymer (A-8) was used. In this case, the drawing was carried out so that the drawing ratio was 1.8 times (-) in both the conveying direction and the widthwise direction and the area ratio of the film was 3.24 times.

For the drawn film thus obtained, the thickness, the in-plane phase difference, Re, and the phase difference in the thicknesswise direction, Rth, were 40 μm, 0.1 (nm), and 4.5 (nm), respectively. The photoelastic coefficient C was $2.0 \times 10^{-12}$(1/Pa). The number of times of flexing in the MIT flex resistance test was 150 times. The glass transition temperature of the film was the same as that of the particulate polymer (A-8) and 107°C.

As with Example 1, the film maintained transparency inherent in the acrylic resin and had a good balance among low birefringence, flex resistance, and heat resistance.

Example 13

A particulate polymer (hereinafter sometimes referred to as "polymer (A-9)") was obtained by copolymerizing 25% by weight of methyl methacrylate, 70% by weight of 4-tert-butylcyclohexyl methacrylate, and 5% by weight of methyl acrylate by suspension polymerization. The weight average molecular weight of the polymer (A-9) was measured by gel permeation chromatography and was found to be $1.8 \times 10^5$. The glass transition temperature was measured by differential scanning calorimetry and was found to be 145°C.

A film was produced in the same manner as in Example 1, except that the particulate polymer (A-9) was used. In this case, the drawing was carried out so that the drawing ratio was 1.8 times (-) in both the conveying direction and the widthwise direction and the area ratio of the film was 3.24 times.

For the drawn film thus obtained, the thickness, the in-plane phase difference, Re, and the phase difference in the thicknesswise direction, Rth, were 40 μm, 0.8 (nm), and 4.0 (nm), respectively. The photoelastic coefficient C was $3.0 \times 10^{-12}$ (1/Pa). The number of times of flexing in the MIT flex resistance test was 105 times. The glass transition temperature of the film was the same as that of the particulate polymer (A-9) and 145°C.

As with Example 1, the film maintained transparency inherent in the acrylic resin and had a good balance among low birefringence, flex resistance, and heat resistance.

Example 14

An optical film using the polymer (A-9) was produced in the same manner as in Example 13, except that the drawing was carried out so that the drawing ratio was 2.4 times (-) in both the conveying direction and the widthwise direction and the area ratio of the film was 5.76 times.

For the drawn film thus obtained, the thickness, the in-plane phase difference, Re, and the phase difference in the thicknesswise direction, Rth, were 40 μm, 0.8 (nm), and 5.0 (nm), respectively. The photoelastic coefficient C was $3.0 \times 10^{-12}$ (1/Pa). The number of times of flexing in the MIT flex resistance test was 234 times. The glass transition temperature of the film was the same as that of the particulate polymer (A-9) and 145°C.

As with Example 1, the film maintained transparency inherent in the acrylic resin and had a good balance among low birefringence, flex resistance, and heat resistance.

Example 15

A particulate polymer (hereinafter sometimes referred to as "polymer (A-10)") was obtained by copolymerizing 20% by weight of methyl methacrylate, 60% by weight of 4-tert-butylcyclohexyl methacrylate, and 20% by weight of methyl acrylate by suspension polymerization. The weight average molecular weight of the polymer (A-10) was measured by gel permeation chromatography and was found to be $1.8 \times 10^5$. The glass transition temperature was measured by differential scanning calorimetry and was found to be 120°C.

A film was produced in the same manner as in Example 1, except that the particulate polymer (A-10) was used. In this case, the drawing was carried out so that the drawing ratio of the film was 1.6 times (-) in both the conveying direction and the widthwise direction and the area ratio of the film was 2.56 times.

For the drawn film thus obtained, the thickness, the in-plane phase difference, Re, and the phase difference in the thicknesswise direction, Rth, were 40 μm, 0.1 (nm), and 0.1 (nm), respectively. The photoelastic coefficient C was $1.0 \times 10^{-12}$ (1/Pa). The number of times of flexing in the MIT flex resistance test was 100 times. The glass transition temperature of the film was the same as that of the particulate polymer (A-10) and 120°C.

As with Example 1, the film maintained transparency inherent in the acrylic resin and had a good balance among low birefringence, flex resistance, and heat resistance.

Example 16

An optical film using the polymer (A-10) was produced in the same manner as in Example 15, except that the drawing was carried out so that the drawing ratio of the film was 2.4 times (-) in both the conveying direction and the widthwise direction and the area ratio of the film was 5.76 times.

For the drawn film thus obtained, the thickness, the in-plane phase difference, Re, and the phase difference in the thicknesswise direction, Rth, were 40 μm, 0.1 (nm), and 0.5 (nm), respectively. The photoelastic coefficient C was $1.0 \times 10^{-12}$ (1/Pa). The number of times of flexing in the MIT flex resistance test was 259. The glass transition temperature of the film was the same as that of the particulate polymer (A-10) and 120°C.

As with Example 1, the film maintained transparency inherent in the acrylic resin and had a good balance among low birefringence, flex resistance, and heat resistance.

As described in Examples 1 to 16, according to one aspect of the present invention, optical films can be produced

which maintain transparency inherent in an acrylic resin and has a good balance among low birefringence, flex resistance, and heat resistance.

Comparative Example 1

A particulate polymer consisting of 100% by weight of methyl methacrylate alone (hereinafter sometimes referred to as "polymer (B-1)") was obtained by suspension polymerization. The weight average molecular weight of the polymer (B-1) was measured by gel permeation chromatography and was found to be $1.8 \times 10^5$. The glass transition temperature was measured by differential scanning calorimetry and was found to be 105°C.

A film was produced in the same manner as in Example 1, except that the particulate polymer (B-1) was used. In this case, the drawing was carried out so that the drawing ratio of the film was 1.2 times (-) in both the conveying direction and the widthwise direction and the area ratio of the film was 1.44 times.

For the drawn film thus obtained, the thickness, the in-plane phase difference, Re, and the phase difference in the thicknesswise direction, Rth, were 40 $\mu$m, -3.0 (nm), and -11.0 (nm), respectively. The photoelastic coefficient C was $-5.1 \times 10^{-12}$(1/Pa). The number of times of flexing in the MIT flex resistance test was 80 times. The glass transition temperature of the film was the same as that of the particulate polymer (B-10) and 105°C.

The film was visually inspected. As a result, the film was not opaque but was highly transparent. The film, however, had an absolute value of the phase difference in the thicknesswise direction, Rth, of larger than 5.0 (nm) and an absolute value of the photoelastic coefficient C of larger than $5.0 \times 10^{-12}$ (1/Pa) and, thus, when used as a protective film for a polarizing plate in a liquid crystal display device, caused a deterioration in image quality. Further, since the number of times of flexing in the MIT flex resistance test was smaller than 100 (times), the film was likely to be broken, for example, in the step of laminating the film to the polarizing plate and thus could not be said to be a film having excellent handleability.

Comparative Example 2

An optical film using the polymer (B-1) was produced in the same manner as in Comparative Example 1, except that the drawing was carried out so that the drawing ratio was 2.2 times (-) in both the conveying direction and the widthwise direction and the area ratio of the film was 4.84 times.

For the drawn film thus obtained, the thickness, the in-plane phase difference, Re, and the phase difference in the thicknesswise direction, Rth, were 40 $\mu$m, -3.0 (nm), and -21.0 (nm), respectively. The photoelastic coefficient C was $-5.1 \times 10^{-12}$ (1/Pa). The number of times of flexing in the MIT flex resistance test was 320 times. The glass transition temperature of the film was the same as that of the particulate polymer (B-1) and 105°C.

The film was visually inspected. As a result, the film was not opaque but was highly transparent. The number of times of flexing in the MIT flex resistance test was not less than 100 (times) by virtue of the film drawing ratio enhancement effect, and, hence, the handleability, for example, in the step of laminating the film to a polarizing plate or the like was improved. Since, however, the absolute value of the phase difference in the thicknesswise direction of the film, Rth was about 4 times larger than the 5.0 (nm), the film, when used as a protective film for a polarizing plate in a liquid crystal display device, caused a deterioration in image quality.

Comparative Example 3

A particulate polymer (hereinafter sometimes referred to as "polymer (B-2)") was obtained by copolymerizing 91% by weight of methyl methacrylate and 9% by weight of 4-tert-butylcyclohexyl methacrylate by suspension polymerization. The weight average molecular weight of the polymer (B-2) was measured by gel permeation chromatography and was found to be $1.8 \times 10^5$. The glass transition temperature was measured by differential scanning calorimetry and was found to be 109°C.

A film was produced in the same manner as in Example 1, except that the particulate polymer (B-2) was used. In this case, the drawing was carried out so that the drawing ratio of the film was 1.2 times (-) in both the conveying direction and the widthwise direction and the area ratio of the film was 1.44 times.

For the drawn film thus obtained, the thickness, the in-plane phase difference, Re, and the phase difference in the thicknesswise direction, Rth, were 40 $\mu$m, -2.0 (nm), and -9.0 (nm), respectively. The photoelastic coefficient C was $-3.5 \times 10^{-12}$ (1/Pa). The number of times of flexing in the MIT flex resistance test was 102 times. The glass transition temperature of the film was the same as that of the particulate polymer (B-2) and 109°C.

The film was visually inspected. As a result, the film was not opaque but was highly transparent. The film, however, had an absolute value of the phase difference in the thicknesswise direction, Rth, of larger than 5.0 (nm) and, thus, when used as a protective film for a polarizing plate in a liquid crystal display device,caused a deterioration in image quality.

Comparative Example 4

A particulate polymer (hereinafter sometimes referred to as "polymer (B-3)") was obtained by copolymerizing 86% by weight of methyl methacrylate, 9% by weight of 4-tert-butylcyclohexyl methacrylate, and 5% by weight of phenoxyethyl acrylate by suspension polymerization. The weight average molecular weight of the polymer (B-3) was measured by gel permeation chromatography and was found to be $1.8 \times 10^5$. The glass transition temperature was measured by differential scanning calorimetry and was found to be 103°C.

A film was produced in the same manner as in Example 1, except that the particulate polymer (B-3) was used. In this case, the drawing was carried out so that the drawing ratio of the film was 2.4 times (-) in both the conveying direction and the widthwise direction and the area ratio of the film was 5.76 times.

For the drawn film thus obtained, the thickness, the in-plane phase difference, Re, and the phase difference in the thicknesswise direction, Rth, were 40 $\mu$m, -0.2 (nm), and -3.0 (nm), respectively. The photoelastic coefficient C was $0.5 \times 10^{-12}$ (1/Pa). The number of times of flexing in the MIT flex resistance test was 454 times. The glass transition temperature of the film was the same as that of the particulate polymer (B-3) and 103°C.

The film was visually inspected. As a result, the film was not opaque but was highly transparent and simultaneously satisfied low birefringence and flex resistance requirements. Since, however, the glass transition temperature of the film was below 105°C, when a polarizing plate obtained by laminating the film was incorporated in a liquid crystal display device, the polarizing plate posed a problem of warpage by heat generated from a light source.

Comparative Example 5

A particulate polymer (hereinafter sometimes referred to as "polymer (B-4)") was obtained by copolymerizing 86% by weight of methyl methacrylate, 9% by weight of 4-tert-butylcyclohexyl methacrylate, and 5% by weight of methyl acrylate by suspension polymerization. The weight average molecular weight of the polymer (B-4) was measured by gel permeation chromatography and was found to be $1.8 \times 10^5$. The glass transition temperature was measured by differential scanning calorimetry and was found to be 104°C.

A film was produced in the same manner as in Example 1, except that the particulate polymer (B-4) was used. In this case, the drawing was carried out so that the drawing ratio of the film was 1.2 times (-) in both the conveying direction and the widthwise direction and the area ratio of the film was 1.44 times.

For the drawn film thus obtained, the thickness, the in-plane phase difference, Re, and the phase difference in the thicknesswise direction, Rth, were 40 $\mu$m, -2.2 (nm), and -10.0 (nm), respectively. The photoelastic coefficient C was $-4.5 \times 10^{-12}$(1/Pa). The number of times of flexing in the MIT flex resistance test was 100 times. The glass transition temperature of the film was the same as that of the particulate polymer (B-4) and 103°C.

The film was visually inspected. As a result, the film was not opaque but was highly transparent. Since, however, the absolute value of the phase difference in the thicknesswise direction, Rth, was larger than 5.0 (nm), when the film was used as a protective film for a polarizing plate in a liquid crystal display device, caused a deterioration in image quality. Further, since the glass transition temperature of the film was below 105°C, when a polarizing plate obtained by laminating the film was incorporated in a liquid crystal display device, the polarizing plate posed a problem of warpage by heat generated from a light source.

Comparative Example 6

A particulate polymer (hereinafter sometimes referred to as "polymer (B-5)") was obtained by copolymerizing 25% by weight of methyl methacrylate and 75% by weight of 4-tert-butylcyclohexyl methacrylate by suspension polymerization. The weight average molecular weight of the polymer (B-5) was measured by gel permeation chromatography and was found to be $1.8 \times 10^5$. The glass transition temperature was measured by differential scanning calorimetry and was found to be 153°C.

A film was produced in the same manner as in Example 1, except that the particulate polymer (B-5) was used. In this case, the drawing was carried out so that the drawing ratio of the film was 1.8 times (-) in both the conveying direction and the widthwise direction and the area ratio of the film was 3.24 times.

For the drawn film thus obtained, the thickness, the in-plane phase difference, Re, and the phase difference in the thicknesswise direction, Rth, were 40 $\mu$m, 1.3 (nm), and 5.5 (nm), respectively. The photoelastic coefficient C was $2.9 \times 10^{-12}$ (1/Pa). The number of times of flexing in the MIT flex resistance test was 95 times. The glass transition temperature of the film was the same as that of the particulate polymer (B-5) and 153°C.

The film was visually inspected. As a result, the film was not opaque but was highly transparent. Since, however, the absolute value of the phase difference in the thicknesswise direction, Rth, was larger than 5.0 (nm), when the film was used as a protective film for a polarizing plate in a liquid crystal display device, caused a deterioration in mage quality. Further, since the number of times of flexing in the MIT flex resistance test was smaller than 100 (times), the

film was likely to be broken, for example, in the step of laminating the film to the polarizing plate and thus could not be said to be a film having excellent handleability.

Comparative Example 7

A particulate polymer (hereinafter sometimes referred to as "polymer (B-6)") was obtained by copolymerizing 20% by weight of methyl methacrylate, 75% by weight of 4-tert-butylcyclohexyl methacrylate, and 5% by weight of methyl acrylate by suspension polymerization. The weight average molecular weight of the polymer (B-6) was measured by gel permeation chromatography and was found to be $1.8 \times 10^5$. The glass transition temperature was measured by differential scanning calorimetry and was found to be 150°C.

A film was produced in the same manner as in Example 1, except that the particulate polymer (B-6) was used. In this case, the drawing was carried out so that the drawing ratio of the film was 1.8 times (-) in both the conveying direction and the widthwise direction and the area ratio of the film was 3.24 times.

For the drawn film thus obtained, the thickness, the in-plane phase difference, Re, and the phase difference in the thicknesswise direction, Rth, were 40 $\mu$m, 1.1 (nm), and 5.0 (nm), respectively. The photoelastic coefficient C was $3.2 \times 10^{-12}$ (1/Pa). The number of times of flexing in the MIT flex resistance test was70 times. The glass transition temperature of the film was the same as that of the particulate polymer (B-6) and 150°C.

The film was visually inspected. As a result, the film was not opaque but was highly transparent. Since, however, the number of times of flexing in the MIT flex resistance test was smaller than 100 (times), the film was likely to be broken, for example, in the step of laminating the film to the polarizing plate and thus could not be said to be a film having excellent handleability.

Comparative Example 8

A particulate polymer (hereinafter sometimes referred to as "polymer (B-7)") was obtained by copolymerizing 5% by weight of methyl methacrylate, 75% by weight of 4-tert-butylcyclohexyl methacrylate, and 20% by weight of methyl acrylate by suspension polymerization. The weight average molecular weight of the polymer (B-7) was measured by gel permeation chromatography and was found to be $1.8 \times 10^5$. The glass transition temperature was measured by differential scanning calorimetry and was found to be 140°C.

A film was produced in the same manner as in Example 1, except that the particulate polymer (B-7) was used. In this case, the drawing was carried out so that the drawing ratio of the film was 2.4 times (-) in both the conveying direction and the widthwise direction and the area ratio of the film was 5.76 times.

For the drawn film thus obtained, the thickness, the in-plane phase difference, Re, and the phase difference in the thicknesswise direction, Rth, were 40 $\mu$m, 1.1 (nm), and 5.0 (nm), respectively. The photoelastic coefficient C was $3.7 \times 10^{-12}$ (1/Pa). The number of times of flexing in the MIT flex resistance test was 75 times. The glass transition temperature of the film was the same as that of the particulate polymer (B-7) and 140°C.

The film was visually inspected. As a result, the film was not opaque but was highly transparent. Since, however, the number of times of flexing in the MIT flex resistance test was smaller than 100 (times), the film was likely to be broken, for example, in the step of laminating the film to the polarizing plate and thus could not be said to be a film having excellent handleability.

Comparative Example 9

A particulate polymer (hereinafter sometimes referred to as "polymer (B-8)") was obtained by copolymerizing 20% by weight of methyl methacrylate, 75% by weight of 4-tert-butylcyclohexyl methacrylate, and 5% by weight of phenoxyethyl acrylate by suspension polymerization. The weight average molecular weight of the polymer (B-8) was measured by gel permeation chromatography and was found to be $1.8 \times 10^5$. The glass transition temperature was measured by differential scanning calorimetry and was found to be 149°C.

A film was produced in the same manner as in Example 1, except that the particulate polymer (B-8) was used. In this case, the drawing was carried out so that the drawing ratio of the film was 1.2 times (-) in both the conveying direction and the widthwise direction and the area ratio of the film was 1.44 times.

For the drawn film thus obtained, the thickness, the in-plane phase difference, Re, and the phase difference in the thicknesswise direction, Rth, were 40 $\mu$m, 4.0 (nm), and 22.0 (nm), respectively. The photoelastic coefficient C was $4.0 \times 10^{-12}$ (1/Pa). The number of times of flexing in the MIT flex resistance test was 33 times. The glass transition temperature of the film was the same as that of the particulate polymer (B-8) and 149°C.

The film was visually inspected. As a result, the film was not opaque but was highly transparent. Since, however, the absolute value of the phase difference in the thicknesswise direction of the film, Rth, was not less than 4 times larger than the 5.0 (nm), the film, when used as a protective film for a polarizing plate in a liquid crystal display device, caused

a significant deterioration in image quality. Further, since the number of times of flexing in the MIT flex resistance test was smaller than 100 (times), the film was likely to be broken, for example, in the step of laminating the film to the polarizing plate and thus could not be said to be a film having excellent handleability.

Comparative Example 10

A particulate polymer (hereinafter sometimes referred to as "polymer (B-9)") was obtained by copolymerizing 90% by weight of methyl methacrylate and 10% by weight of phenoxyethyl acrylate by suspension polymerization. The weight average molecular weight of the polymer (B-9) was measured by gel permeation chromatography and was found to be $1.8 \times 10^5$. The glass transition temperature was measured by differential scanning calorimetry and was found to be 93°C.

A film was produced in the same manner as in Example 1, except that the particulate polymer (B-9) was used. In this case, the drawing was carried out so that the drawing ratio of the film was 2.4 times (-) in both the conveying direction and the widthwise direction and the area ratio of the film was 5.76 times.

For the drawn film thus obtained, the thickness, the in-plane phase difference, Re, and the phase difference in the thicknesswise direction, Rth, were 40 μm, -0.1 (nm), and -0.3 (nm), respectively. The photoelastic coefficient C was $1.1 \times 10^{-12}$(1/Pa). The number of times of flexing in the MIT flex resistance test was 468 times. The glass transition temperature of the film was the same as that of the particulate polymer (B-9) and 93°C.

The glass transition temperature of the film was very low and 93°C. Thus, when a polarizing plate obtained by laminating the film was incorporated in a liquid crystal display device, the polarizing plate posed a problem of warpage by heat generated from a light source.

Reference Example 1

In the same manner as in Example 1, a film was produced from the particulate polymer (A-1) used in Example 1. In this case, the drawing was carried out so that the drawing ratio of the film was 1.1 times (-) in both the conveying direction and the widthwise direction and the area ratio of the film was 1.21 times.

For the drawn film thus obtained, the thickness, the in-plane phase difference, Re, and the phase difference in the thicknesswise direction, Rth, were 40 μm, -1.0 (nm), and -4.0 (nm), respectively. The photoelastic coefficient C was $-2.9 \times 10^{-12}$ (1/Pa). The number of times of flexing in the MIT flex resistance test was 74 times. The glass transition temperature of the film was the same as that of the particulate polymer (A-1) and 130°C.

The film was visually inspected. As a result, the film was not opaque but was highly transparent and simultaneously satisfied low birefringence and flex resistance requirements. Since, however, the drawing ratio was smaller than 1.4 times in terms of area ratio, the number of times of flexing in the MIT flex resistance test was smaller than 100 (times), the film was likely to be broken, for example, in the step of laminating the film to the polarizing plate and thus could not be said to be a film having excellent handleability.

Reference Example 2

A film was produced in the same manner as in Example 1, except that the particulate polymer (A-4) used in Example 6 was used. In this case, the drawing was carried out so that the drawing ratio of the film was 2.5 times (-) in both the conveying direction and the widthwise direction and the area ratio of the film was 6.25 times.

For the drawn film thus obtained, the thickness, the in-plane phase difference, Re, and the phase difference in the thicknesswise direction, Rth, were 40 μm, 0.1 (nm), and 1.5 (nm), respectively. The photoelastic coefficient C was $1.0 \times 10^{-12}$ (1/Pa). The number of times of flexing in the MIT flex resistance test was 583 times. The glass transition temperature of the film was the same as that of the particulate polymer (A-4) and 145°C.

Since the drawing ratio was larger than 6.0 times in terms of area ratio, the film was opaque and, thus, could not be used as an optical film without difficulties.

The ratio of comonomers and drawing ratio and evaluation results in Examples are shown in Tables 1 and 2. The ratio of comonomers and drawing ratio and evaluation results in Comparative Examples and Reference Examples are shown in Tables 3 and 4. In visual inspection of the film, when the transparency was excellent, the film was evaluated as A; and, when the transparency was poor due to clouding, the film was evaluated as B.

Table 1

| | Monomer ratio (weight %) | | | Drawing ratio | | |
|---|---|---|---|---|---|---|
| | Methyl methacrylate | Tert-butylcyclohexyl methacrylate | Monomer (a) | Conveying direction (times) | Widthwise direction (times) | Area ratio (times) |
| Example 1 | 70 | 30 | 0 | 1.2 | 1.2 | 1.44 |
| Example 2 | 60 | 40 | 0 | 1.2 | 1.2 | 1.44 |
| Example 3 | 60 | 40 | 0 | 2.2 | 2.2 | 4.84 |
| Example 4 | 50 | 50 | 0 | 1.4 | 1.4 | 1.96 |
| Example 5 | 50 | 50 | 0 | 2.4 | 2.4 | 5.76 |
| Example 6 | 40 | 60 | 0 | 1.6 | 1.6 | 2.56 |
| Example 7 | 40 | 60 | 0 | 2.4 | 2.4 | 5.76 |
| Example 8 | 30 | 70 | 0 | 1.8 | 1.8 | 3.24 |
| Example 9 | 85 | 10 | 5 (phenoxyethyl acrylate) | 1.2 | 1.2 | 1.44 |
| Example 10 | 85 | 10 | 5 (phenoxyethyl acrylate) | 2.4 | 2.4 | 5.76 |
| Example 11 | 75 | 20 | 5 (phenoxyethyl acrylate) | 2.4 | 2.4 | 5.76 |
| Example 12 | 70 | 20 | 10 (phenoxyethyl acrylate) | 1.8 | 1.8 | 3.24 |
| Example 13 | 25 | 70 | 5 (methyl acrylate) | 1.8 | 1.8 | 3.24 |
| Example 14 | 25 | 70 | 5 (methyl acrylate) | 2.4 | 2.4 | 5.76 |
| Example 15 | 20 | 60 | 20 (methyl acrylate) | 1.6 | 1.6 | 2.56 |
| Example 16 | 20 | 60 | 20 (methyl acrylate) | 2.4 | 2.4 | 5.76 |

Table 2

| | Re (nm) | Rth (nm) | Photoelastic coefficient C ($10^{-12}$/Pa) | Number of times of flexing in MIT flex resistance test (times) | Glass transition temp. (°C) | Transparency by visual evaluation |
|---|---|---|---|---|---|---|
| Example 1 | -1.0 | -5.0 | -2.9 | 110 | 130 | A |
| Example 2 | -0.5 | -2.0 | -1.0 | 103 | 135 | A |
| Example 3 | -0.5 | -4.7 | -1.0 | 450 | 135 | A |
| Example 4 | -0.1 | -0.1 | 0.1 | 110 | 140 | A |
| Example 5 | -0.1 | -1.1 | 0.1 | 445 | 140 | A |
| Example 6 | 0.1 | 0.3 | 1.0 | 105 | 145 | A |
| Example 7 | 0.1 | 1.4 | 1.0 | 393 | 145 | A |
| Example 8 | 1.0 | 4.8 | 2.5 | 105 | 150 | A |
| Example 9 | -0.1 | -1.0 | 0.5 | 104 | 108 | A |
| Example 10 | -0.1 | -3.2 | 0.5 | 494 | 108 | A |
| Example 11 | 0.1 | 4.0 | 1.0 | 421 | 120 | A |
| Example 12 | 0.1 | 4.5 | 2.0 | 150 | 107 | A |
| Example 13 | 0.8 | 4.0 | 3.0 | 105 | 145 | A |
| Example 14 | 0.8 | 5.0 | 3.0 | 234 | 145 | A |
| Example 15 | 0.1 | 0.1 | 1.0 | 100 | 120 | A |
| Example 16 | 0.1 | 0.5 | 1.0 | 259 | 120 | A |

Table 3

| | Monomer ratio (weight%) | | | Drawing ratio | | |
|---|---|---|---|---|---|---|
| | Methyl methacrylate | Tert-butylcyclohexyl methacrylate | Monomer (a) | Conveying direction (times) | Widthwise direction (times) | Area ratio (times) |
| Comparative Example 1 | 100 | 0 | 0 | 1.2 | 1.2 | 1.44 |
| Comparative Example 2 | 100 | 0 | 0 | 2.2 | 2.2 | 4.84 |

(continued)

| | Monomer ratio (weight%) | | | Drawing ratio | | |
|---|---|---|---|---|---|---|
| | Methyl methacrylate | Tert-butylcyclohexyl methacrylate | Monomer (a) | Conveying direction (times) | Widthwise direction (times) | Area ratio (times) |
| Comparative Example 3 | 91 | 9 | 0 | 1.2 | 1.2 | 1.44 |
| Comparative Example 4 | 86 | 9 | 5 (phenoxyethyl acrylate) | 2.4 | 2.4 | 5.76 |
| Comparative Example 5 | 86 | 9 | 5 (methyl acrylate) | 1.2 | 1.2 | 1.44 |
| Comparative Example 6 | 25 | 75 | 0 | 1.8 | 1.8 | 3.24 |
| Comparative Example 7 | 20 | 75 | 5 (methyl acrylate) | 1.8 | 1.8 | 3.24 |
| Comparative Example 8 | 5 | 75 | 20 (methyl acrylate) | 2.4 | 2.4 | 5.76 |
| Comparative Example 9 | 20 | 75 | 5 (phenoxyethyl acrylate) | 1.2 | 1.2 | 1.44 |
| Comparative Example 10 | 90 | 0 | 10 (phenoxyethyl acrylate) | 2.4 | 2.4 | 5.76 |
| Reference Example 1 | 70 | 30 | 0 | 1.1 | 1.1 | 1.21 |
| Reference Example 2 | 40 | 60 | 0 | 2.5 | 2.5 | 6.25 |

Table 4

| | Re (nm) | Rth (nm) | Photoelastic coefficient C ($10^{-12}$/Pa) | Number of times of flexing in MIT flex resistance test (times) | Glass transition temp. (°C) | Transparency by visual evaluation |
|---|---|---|---|---|---|---|
| Comparative Example 1 | -3.0 | -11.0 | -5.1 | 80 | 105 | A |
| Comparative Example 2 | -3.0 | -21.0 | -5.1 | 320 | 105 | A |
| Comparative Example 3 | -2.0 | -9.0 | -3.5 | 102 | 109 | A |
| Comparative Example 4 | -0.2 | -3.0 | 0.5 | 454 | 103 | A |
| Comparative Example 5 | -2.2 | -10.0 | -4.5 | 100 | 104 | A |
| Comparative Example 6 | 1.3 | 5.5 | 2.9 | 95 | 153 | A |
| Comparative Example 7 | 1.1 | 5.0 | 3.2 | 70 | 150 | A |

(continued)

| | Re (nm) | Rth (nm) | Photoelastic coefficient C ($10^{-12}$/Pa) | Number of times of flexing in MIT flex resistance test (times) | Glass transition temp. (°C) | Transparency by visual evaluation |
|---|---|---|---|---|---|---|
| Comparative Example 8 | 1.1 | 5.0 | 3.7 | 75 | 140 | A |
| Comparative Example 9 | 4.0 | 22.0 | 4.0 | 33 | 149 | A |
| Comparative Example 10 | -0.1 | -0.3 | 1.1 | 468 | 93 | A |
| Reference Example 1 | -1.0 | -4.0 | -2.9 | 74 | 130 | A |
| Reference Example 2 | 0.1 | 1.5 | 1.0 | 583 | 145 | B |

Industrial Applicability

The present invention can provide an optical film that has a low birefringence that, when the optical film is incorporated in a liquid crystal display device, can satisfactorily avoid a deterioration in image quality, the optical film having a good balance between heat resistance and flex resistance, and a liquid crystal display device comprising the optical film.

**Claims**

1. An optical film comprising a resin material comprising a copolymer of 20 to 90% by weight of methyl methacrylate, 10 to 70% by weight of tert-butylcyclohexyl methacrylate represented by formula (I):

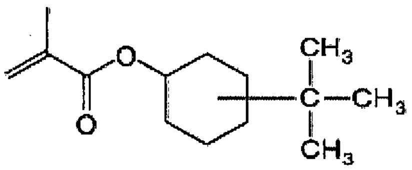

( 1 )

and 0 to 20% by weight of a monomer other than methyl methacrylate and tert-butylcyclohexyl methacrylate, the optical film having been produced by drawing an undrawn film formed by melt-extruding the resin material by a factor of 1.4 to 6.0 in terms of area ratio.

2. An optical film comprising a resin material comprising a copolymer of 20 to 90% by weight of methyl methacrylate, 10 to 70% by weight of tert-butylcyclohexyl methacrylate represented by formula (I):

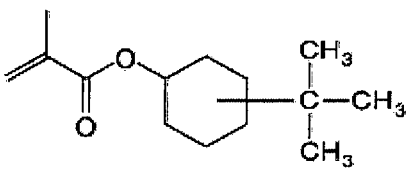

( 1 )

and 0 to 20% by weight of a monomer other than methyl methacrylate and tert-butylcyclohexyl methacrylate, wherein the absolute value of an in-plane phase difference value, Re, and the absolute value of a phase difference value in the thicknesswise direction, Rth, are each not more than 5.0 nm, and
the absolute value of a photoelastic coefficient is not more than $5.0 \times 10^{-12}$ (/Pa).

3. The optical film according to claim 2, wherein the resin material has a glass transition temperature of 105°C or above.

4. The optical film according to claim 2 or 3, wherein the number of times of flexing in an MIT flex resistance test according to JIS (Japanese Industrial Standards) P 8115 is 100 times or more.

5. A resin material for an optical film, the resin material comprising a copolymer of 20 to 90% by weight of methyl methacrylate, 10 to 70% by weight of tert-butylcyclohexyl methacrylate represented by formula (I):

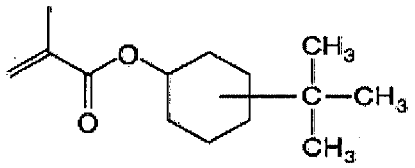

(1)

and 0 to 20% by weight of a monomer other than methyl methacrylate and tert-butylcyclohexyl methacrylate.

6. A method for producing an optical film comprising the steps of:melt-extruding a resin material for an optical film according to claim 5 to obtain an undrawn film; and drawing the undrawn film by a factor of 1.4 to 6.0 times in terms of area ratio to obtain an optical film.

7. An image display device comprising an optical film according to any one of claims 1 to 4.

**INTERNATIONAL SEARCH REPORT**

International application No.
PCT/JP2012/074539

A. CLASSIFICATION OF SUBJECT MATTER
*C08F220/14*(2006.01)i, *B29C55/02*(2006.01)i, *C08F220/18*(2006.01)i, *G02B5/30*(2006.01)i, *G02F1/1335*(2006.01)i, *B29L7/00*(2006.01)n, *B29L11/00*(2006.01)n

According to International Patent Classification (IPC) or to both national classification and IPC

B. FIELDS SEARCHED

Minimum documentation searched (classification system followed by classification symbols)
C08F220/14, B29C55/02, C08F220/18, G02B5/30, G02F1/1335, B29L7/00, B29L11/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 63-017915 A (Asahi Chemical Industry Co., Ltd.), 25 January 1988 (25.01.1988), claims; page 1, lower right column, lines 5 to 10; examples 1, 4 to 5 (Family: none) | 5<br>1-4,6-7 |
| Y | WO 2007/026659 A1 (Nitto Denko Corp.), 08 March 2007 (08.03.2007), paragraphs [0001] to [0002], [0006] to [0007], [0043], [0055] to [0056], [0059] to [0061], [0170]; claims & EP 1930748 A1 & KR 10-2008-0050398 A & CN 101253431 A | 1-4,6-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 November, 2012 (22.11.12) | 04 December, 2012 (04.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2012/074539

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-053492 A (Toray Industries, Inc.), 12 March 2009 (12.03.2009), claims; paragraphs [0001] to [0002], [0029], [0032], [0045] (Family: none) | 1-4,6-7 |
| A | JP 2-233710 A (Asahi Chemical Industry Co., Ltd.), 17 September 1990 (17.09.1990), claims; examples 2 to 8, 17 to 20 (Family: none) | 1-7 |
| A | JP 63-017401 A (Asahi Chemical Industry Co., Ltd.), 25 January 1988 (25.01.1988), claims; examples 1, 3 to 11 (Family: none) | 1-7 |
| A | JP 2009-052036 A (Toray Industries, Inc.), 12 March 2009 (12.03.2009), claims; paragraphs [0002], [0021] to [0023], [0064] (Family: none) | 1-7 |
| A | JP 2010-072135 A (Nippon Shokubai Co., Ltd.), 02 April 2010 (02.04.2010), claims; paragraphs [0002], [0056], [0059], [0093] to [0094] (Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007100044 A
- JP 2008255149 A
- JP 2009292869 A
- JP 2001233912 A